# EUROPEAN PATENT APPLICATION

(11) **EP 2 469 258 A2**
(43) Date of publication of application: **27.06.2012**
(21) Application number: 11193135.8
(22) Date of filing: 13.12.2011
(51) Int. Cl.: G01M 15/05

(54) **Method And System For Online Creep Monitoring**

(30) Priority: 23.12.2010 US 977440
(71) Applicant: General Electric Company, Schenectady, New York 12345 (US)
(72) Inventor: Nieters, Edward James, Niskayuna, NY 12309 (US); Ruud, James Anthony, Niskayuna, NY 12309 (US); Harding, Kevin George, Niskayuna, NY 12309 (US); Hasz, Wayne Charles, Niskayuna, NY 12309 (US); Aandarawis, Emad Andarawis, Niskayuna, NY 12309 (US); Batzinger, Thomas James, Niskayuna, NY 12309 (US); Nirmalan, Nirm Velumylum, Niskayuna, NY 12309 (US); Singh, Prabhjot, Niskayuna, NY 12309 (US); Wang, Guanghua, Niskayuna, NY 12309 (US)
(74) Representative: Cleary, Fidelma

(57) **Abstract**

A creep monitoring system (100) is provided. The system includes a creep sensor assembly (116) formed onto a surface of an object (114) rotatable about an axis, the creep sensor assembly including an image pattern (300), an optical monitoring system with line of sight to the creep sensor assembly, the optical monitoring system configured to collect information from the creep sensor assembly, a processor (110) programmed to receive the information, and determine at least one of an amount of creep (124) of the object.

## Description

### BACKGROUND OF THE INVENTION

The field of the invention relates generally to rotating machinery, and more specifically, to a system and method for online monitoring of creep of rotating components.

As rotatable machines operate, a condition of components of the machine may deteriorate over time. This degradation of condition typically affects performance and may be due to various factors. One such factor is the deformation of the material of the component when exposed to stresses less than its yield strength over time, or creep. Creep can degrade gaps between parts that move relative to each other and can create projectile hazards and debris if the creep is permitted to occur until failure of the component material. Some components, such as turbine blades, are difficult or costly to remove from service for periodic inspections, and scheduled shutdowns for plant maintenance and repair may occur infrequently enough that creep may cause damage before it can be detected and repaired.

### BRIEF DESCRIPTION OF THE INVENTION

The present invention resides in a creep monitoring system including a creep sensor assembly formed onto a surface of an object rotatable about an axis, the creep sensor assembly includes at least one of an image pattern and a radio frequency interrogatable circuit. The creep monitoring system also includes an online monitoring system communicatively coupled to the creep sensor assembly. The online monitoring system configured to collect information from the creep sensor assembly relative to an amount and a rate of creep of the object. The creep monitoring system also includes a processor programmed to receive the information, correct the information for movement of the creep sensor assembly during the collection, and determine a creep rate, a crack presence, and a temperature of the object simultaneously.

The invention further resides in a method of monitoring creep in a moving object including applying a creep sensor assembly to a moving object, receiving from the creep sensor assembly information relative to creep associated with the moving object, determining, using a processor, at least one of an amount of creep and a rate of creep of the moving object, and outputting the at least one of an amount of creep and a rate of creep of the moving object.

The creep sensor assembly includes at least one of an image pattern and a radio frequency interrogatable sensor direct deposited on a moving object. The creep sensor assembly is direct deposited using at least one of a direct write technique, a thermal spray technique and a screen printing technique. The image pattern includes at least one of a moiré pattern, film cooling holes and a surface feature of the object. The radio frequency interrogatable sensor includes an antenna portion and a capacitor portion electrically coupled to the antenna portion. A dimensional property of the image pattern changes with creep in the moving object and an electrical property of the radio frequency interrogatable sensor changes with creep in the moving object.

### BRIEF DESCRIPTION OF THE DRAWINGS

Embodiments of the invention will now be described, by way of example only, with reference to the accompanying drawings in which:
FIGS. 1-12 show exemplary embodiments of the method and system described herein.
FIG. 1 is a schematic block diagram of an online creep monitoring system in accordance with an exemplary embodiment of the present invention;
FIG. 2 is a schematic block diagram of a breakdown of components that may be used with the online creep monitoring system shown in FIG. 1;
FIG. 3A is a schematic block diagram illustrating a plurality of creep sensor assemblies that may be used with the online creep monitoring system shown in FIG. 1;
FIG 3B is a schematic diagram of imaging a moiré pattern on an object in accordance with an exemplary embodiment of the present invention.
FIG. 4 is a schematic block diagram illustrating a plurality of manufacturing techniques used to form creep sensor assemblies shown in FIG. 3B on a surface of the object;
FIG. 5A is a cross sectional view of the creep sensor assembly shown in FIG. 1 that may be used with non-TBC objects in accordance with an exemplary embodiment of the present invention;
FIG. 5B is a cross sectional view of the creep sensor assembly shown in FIG. 1 that may be used with TBC objects in accordance with another exemplary embodiment of the present invention;
FIG. 6 is a schematic block diagram illustrating a plurality of materials that may be used to form the creep sensor assemblies shown in FIG. 1 on a surface of the object;
FIG. 7 is a schematic block diagram illustrating the online imaging system using at least one of a passive imaging mode and an active imaging mode;
FIG. 8 is a flowchart of an image processing method for calculating a creep rate of object in real-time using the collected images of creep sensor assemblies in accordance with an exemplary embodiment of the present invention;
FIG. 9 is a schematic block diagram of the remote interrogation system shown in FIG. 1 in accordance with an exemplary embodiment of the present invention;
FIG. 10 is a plan view of the creep sensor assembly associated with the remote interrogation system in accordance with an exemplary embodiment of the present invention;
FIG. 11 is a schematic diagram of the remote interrogation system shown in FIG. 1 in accordance with an exemplary embodiment of the present invention;
FIG. 12 is a flow chart of a method of remotely interrogating RF creep sensor assemblies formed on, for example, high-speed rotating objects such as turbine blades.

### DETAILED DESCRIPTION OF THE INVENTION

The following detailed description illustrates embodiments of the invention by way of example and not by way of limitation. It is contemplated that the invention has general application to analytical and methodical embodiments of monitoring creep in moving objects in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Embodiments of the present invention provide an online creep monitoring system for high speed rotating devices, such as, but not limited to, a gas turbine blade. In various embodiments, a creep rate, a crack presence and size, a temperature, and a coating spallation for high speed rotating devices are monitored simultaneously. The online creep monitoring system can be a part of an online prognosis and health monitoring (PHM) system.

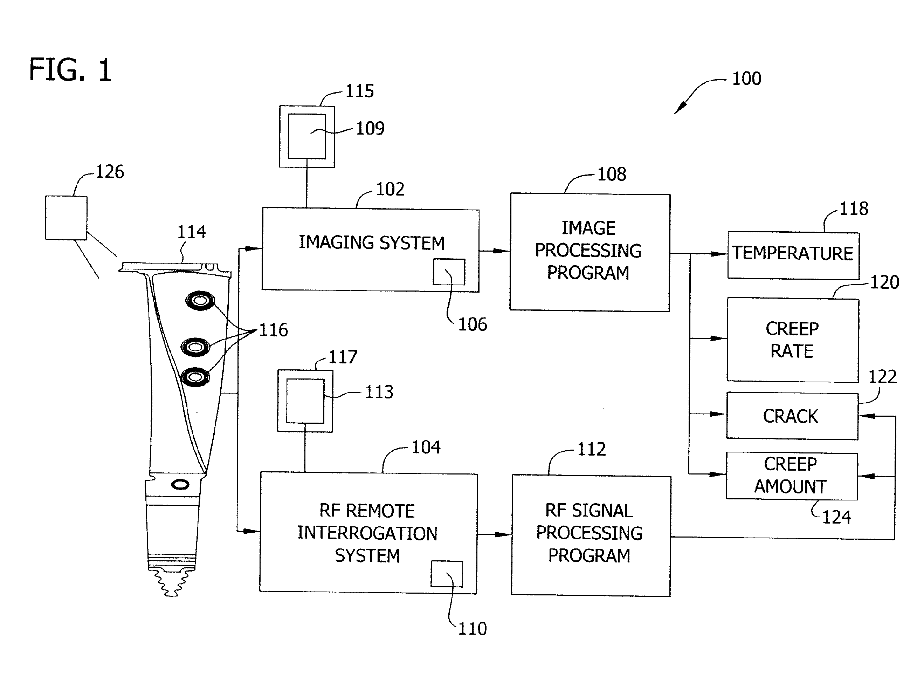

FIG. 1 is a schematic block diagram of an online creep monitoring system 100 in accordance with an exemplary embodiment of the present invention. In the exemplary embodiment, online creep monitoring system 100 includes at least one of an online imaging system 102 and a remote interrogation system 104, such as, but not limited to, a radio frequency (RF) remote interrogation system. Online imaging system 102 includes a processor 106 configured to execute an image processing program 108 that directs online imaging system 102 to acquire images and/or image patterns from an imaging sensor 109 and analyze the images and/or image patterns for creep related calculations. The image pattern can be a moiré pattern, film cooling holes or other image patterns with fine features for creep rate calculation. Remote interrogation system 104 also includes a processor 110 configured to execute a signal processing program 112 that directs remote interrogation system 104 to acquire RF signals from an RF sensor 113 and to calculate a creep rate in real-time using the collected RF signals. Online imaging system 102 and remote interrogation system 104 are configured to monitor a relatively high-speed rotating object 114, such as, but not limited to, a turbine blade, a fan or compressor blade, or other airfoil having a creep sensor assembly 116 formed thereon. In various embodiments, creep sensor assembly 116 includes imaging sensor 109 for use with online imaging system 102 or RF sensor 113 for use with remote interrogation system 104. Imaging sensor 109 and RF sensor 113 may be enclosed in respective housings, 115 and 117 that may be positioned within a casing (not shown) surrounding object 114 or may be positioned outside of the casing but, still in communication with a respective one of creep sensor assembly 116 for example, through a viewport of a wave-guide. When positioned within the casing, housings 115 and 117 may be cooled or otherwise environmentally supported for operation within the casing over relatively long periods of time. For temperature measurement, creep sensor assembly 116 is illuminated with a light source 126. Creep sensor assembly 116 is formed of a doped material that generates a phosphorescence signal at different wavelength bands from light source 126 such that its intensity ratio or lifetime can be used to detect a temperature of object 114. Online imaging system 102 and remote interrogation system 104 is configured to measure a temperature 118, a creep rate 120, a crack 122 and an amount of creep 124 simultaneously. Multiple creep sensor assemblies 116 may be deposited on the object surface at multiple locations for local creep detection, and they can be either isolated or connected to form a network. Creep sensor assemblies 116 may be formed of different materials to be visible with different detectors if under a TBC or not.

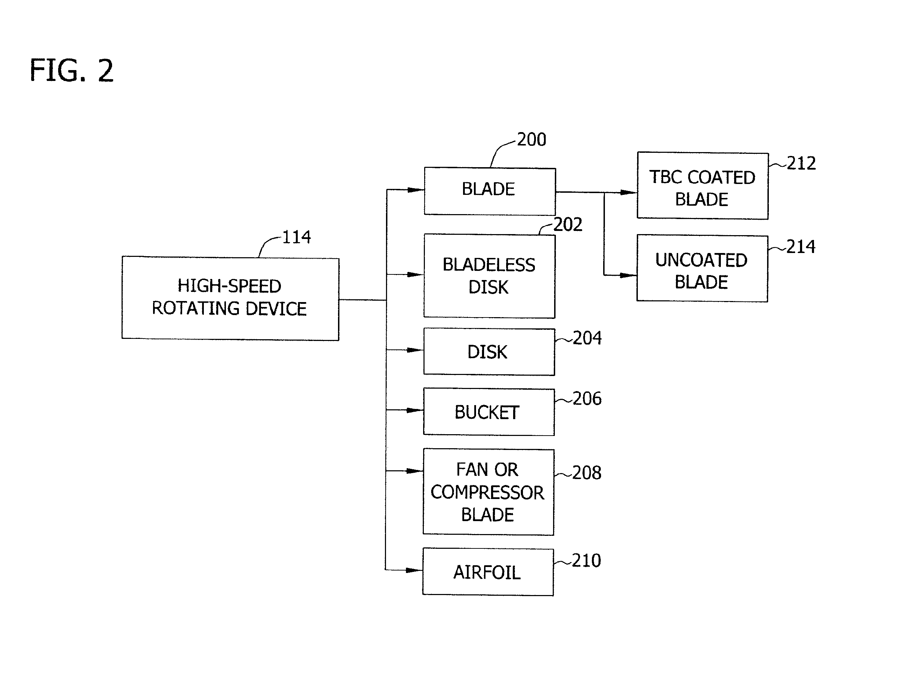

FIG. 2 is a schematic block diagram of a breakdown of components that may be used with online creep monitoring system 100 (shown in FIG. 1). In the exemplary embodiment, relatively high-speed rotating object 114 may include but is not limited to, a turbine blade 200, a bladeless disk 202, such as a Tesla turbine rotor, a disk 204, a bucket 206, a fan or compressor blade 208, or other airfoil 210. Object 114 may include components used in gas turbine engines and steam turbines, coated 214 with a thermal barrier coating (TBC) and uncoated.

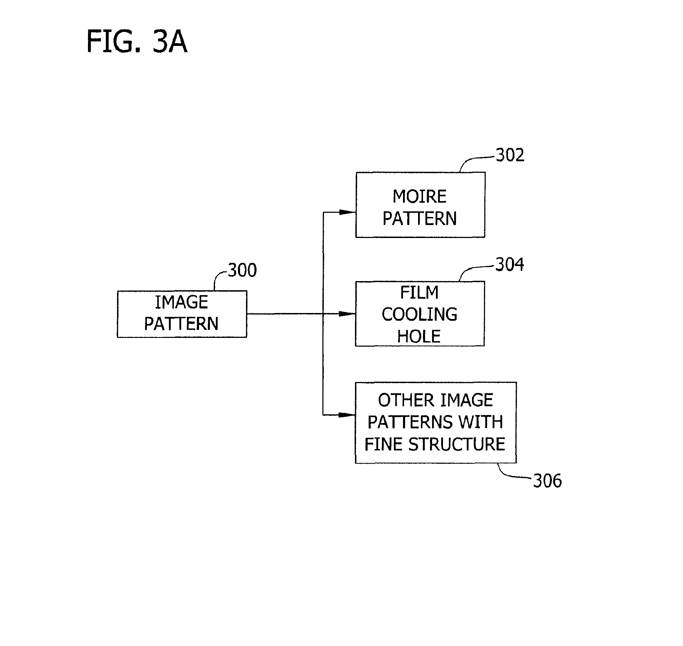

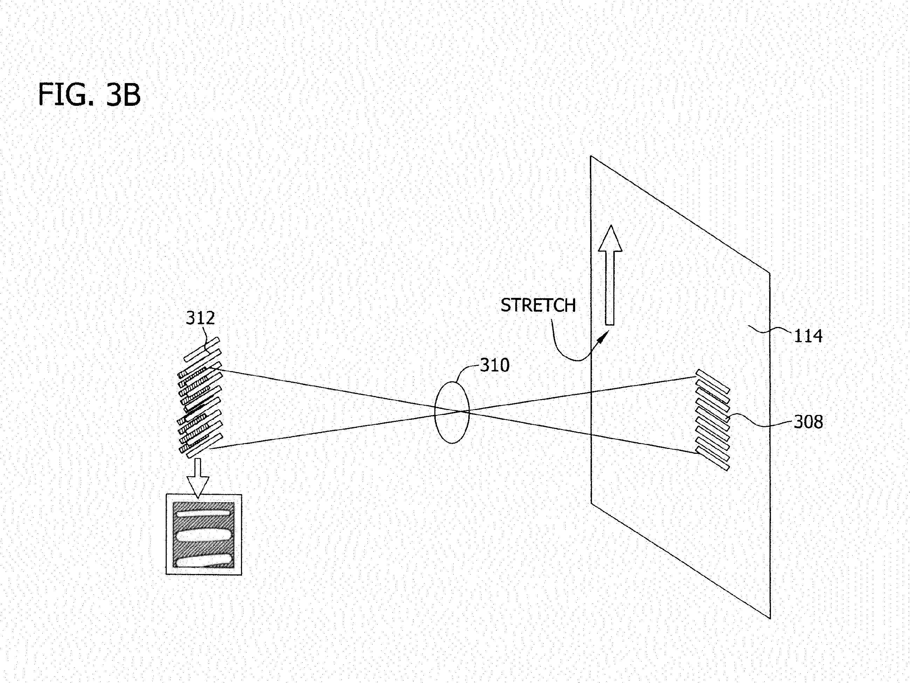

FIG. 3A is a schematic block diagram illustrating a plurality of creep sensor assemblies 116 that may be used with online creep monitoring system 100 (shown in FIG. 1). FIG 3B is a schematic diagram of imaging a moiré pattern on an object 114. In the exemplary embodiment, image patterns 300 can include a moiré pattern 302, film cooling holes 304, or other image patterns 306 having fine features for creep rate calculation. In the exemplary embodiment, a moiré pattern 308 is positioned on object 114. Moiré pattern 308 is viewed through a lens 310 and if object 114 has stretched, for example, due to creep a moiré beat pattern 312 is observed and the amount of creep is determined from varying characteristics of moiré beat pattern 312.

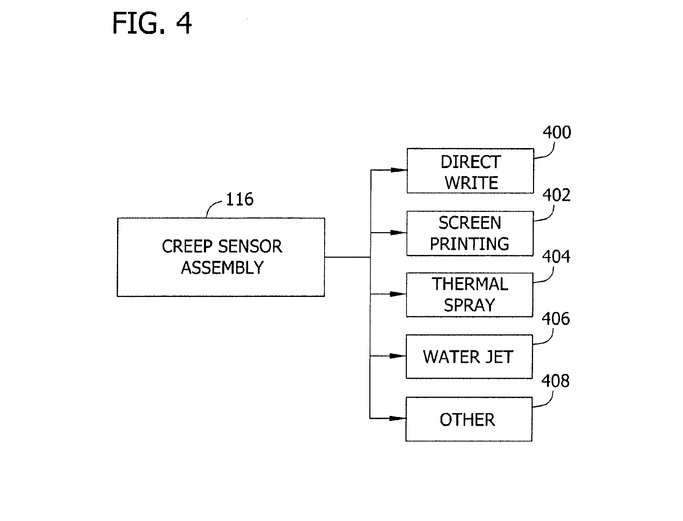

FIG. 4 is a schematic block diagram illustrating a plurality of manufacturing techniques used to form creep sensor assemblies 116 (shown in FIG. 3A) on a surface of object 114. In the exemplary embodiment, manufacturing techniques for directly deposited creep sensor assemblies 116 include, for example, but not limited to, a direct write technique 400, a screen printing technique 402, a thermal spray technique 404, and a water jet technique 406. In addition to directly deposited techniques other printing and forming techniques 408 are contemplated.

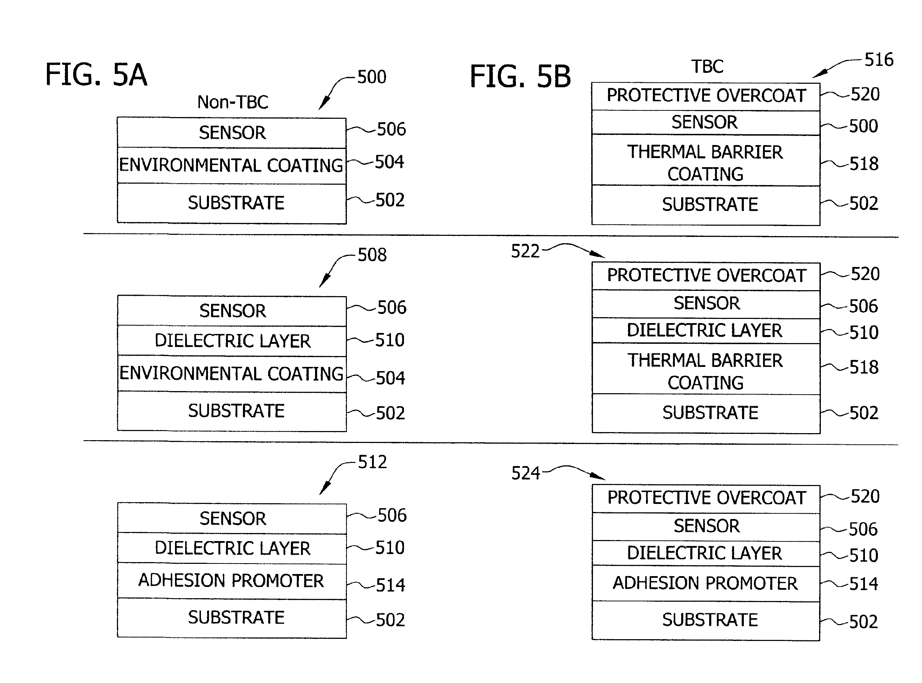

FIG. 5A is a cross sectional view of creep sensor assembly 116 (shown in FIG. 1) that may be used with non-TBC objects 114 in accordance with an exemplary embodiment of the present invention. FIG. 5B is a cross sectional view of creep sensor assembly 116 (shown in FIG. 1) that may be used with TBC objects 114 in accordance with another exemplary embodiment of the present invention. In the exemplary embodiments, creep sensor assemblies 116 are embodied in a multi-layered structure. Each of the different layers of creep sensor assemblies 116 permit a thermal expansion of creep sensor assemblies 116 to substantially match a thermal expansion of object 114, to protect and increase a life of creep sensor assemblies 116 under harsh environments, and to serve as insulation, and abrasion or moisture protection.

In the exemplary embodiment, each of creep sensor assemblies 116 used with non-TBC objects 114 and with TBC objects 114 include three basic configurations. A first configuration 500 associated with a non-TBC object 114 includes a substrate 502, for example, a blade or bucket with a protective environmental coating 504 and a sensor 506 deposited on top.

A second configuration 508 associated with a non-TBC object 114 includes substrate 502, a protective environmental coating 504, a dielectric layer 510, and sensor 506. The addition of dielectric layer 510 permits forming an RF sensor, which includes a resonance circuit containing a capacitor, of which a first portion is formed on one side of dielectric layer 510 and a second portion is formed on a second side of dielectric layer 510.

A third configuration 512 associated with a non-TBC object 114 includes substrate 502, an adhesion promoter layer 514, a dielectric layer 510, and sensor 506. Adhesion promoter layer 514 also acts as protective environmental coating for substrate 502. Adhesion promoter layer 514 used in third configuration 512 facilitates improving an attachment of dielectric layer 510, and sensor 506 to substrate 502.

A first configuration 516 associated with a TBC object 114 includes a substrate 502, for example, a blade or bucket with a TBC layer 518, sensor 506, and a protective overcoat layer 520.

A second configuration 522 associated with a TBC object 114 includes substrate 502, TBC layer 518, dielectric layer 510, sensor 506, and protective overcoat layer 520. The addition of dielectric layer 510 permits forming an RF sensor, which includes a resonance circuit containing a capacitor, of which a first portion is formed on one side of dielectric layer 510 and a second portion is formed on a second side of dielectric layer 510.

A third configuration 524 associated with a TBC object 114 includes substrate 502, adhesion promoter layer 514, a dielectric layer 510, sensor 506, and protective overcoat layer 520. The addition of dielectric layer 510 permits forming an RF sensor, which includes a resonance circuit containing a capacitor, of which a first portion is formed on one side of dielectric layer 510 and a second portion is formed on a second side of dielectric layer 510.

In various embodiments, protective overcoat layer 520 may also be applied to non-TBC objects 114. Additionally, some embodiments of the above described configurations may use adhesion promoter layer 514 between additional layers when necessary, for example, between protective environmental coating 504 and sensor 506 in configuration 500 and between substrate 502, and dielectric layer 510 shown in configuration 508.

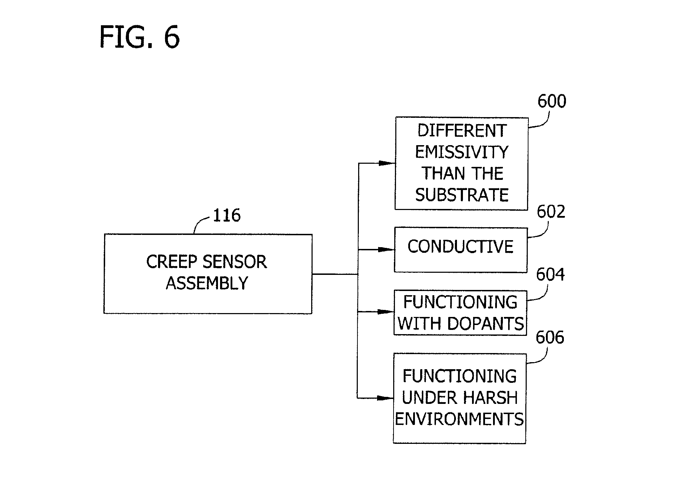

FIG. 6 is a schematic block diagram illustrating a plurality of materials that may be used to form creep sensor assemblies 116 (shown in FIG. 1) on a surface of object 114. In the exemplary embodiment, a material used to form creep sensor assemblies 116 has at least one of the following characteristics: a different emissivity than the substrate material 600, is conductive 602, is doped 604 with other materials for better image contrast or to form a temperature sensor, and is functional 606 under a harsh environment proximate object 114. In one embodiment, online imaging system 102 and remote interrogation system 104 includes imaging sensor 109 or RF sensor 113 respectively that are enclosed in housing 115 and 117, respectively that are configured to withstand the harsh environment inside the casing of, for example, a turbine engine component.

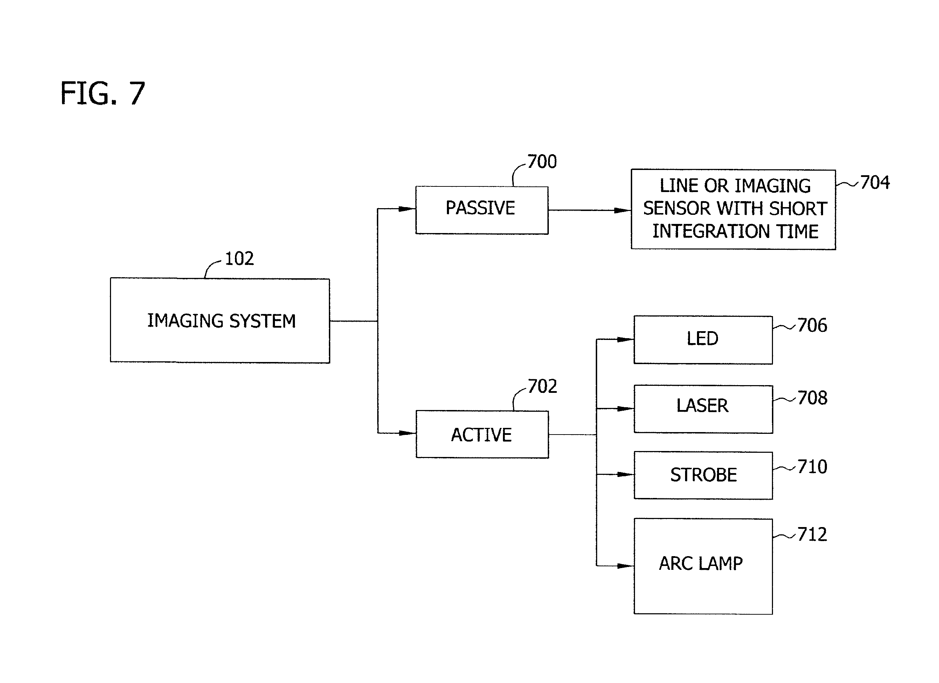

FIG. 7 is a schematic block diagram illustrating online imaging system 102 using at least one of a passive imaging mode 700 and an active imaging mode 702. Passive imaging mode 700, in one embodiment, incorporates a short integration time image sensor 704 to "freeze" the high-speed rotating objects 114 so that only one object 114 may be analyzed at a time. Active imaging mode 702 may use, for example, light source 126 generating short light pulses to "freeze" high-speed rotating objects 114 for collection of images. Light source 126 may include for example, but not limited to an LED source 706, a laser source 708, a strobe 710,, and an arc lamp712.

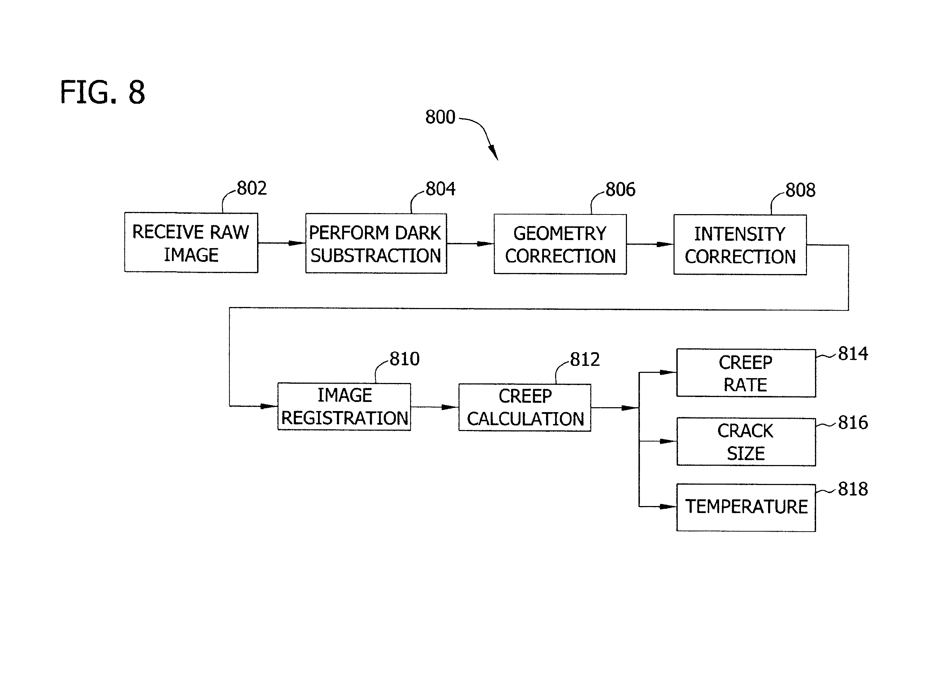

FIG. 8 is a flowchart of an image processing method 800 for calculating a creep rate of object 114 in real-time using the collected images of creep sensor assemblies 116 in accordance with an exemplary embodiment of the present invention. In the exemplary embodiment, method 800 includes receiving raw image data 802, performing 804 a dark subtraction process on the received image data, and correcting 806 a geometry associated with the image data. Method 800 also includes intensity correcting 808 the image data, registering 810 the image, and calculating 812 creep related parameters, such as, but not limited to, a creep rate 814, a crack size 816, for example, a crack width, and a temperature 818 of object 114.

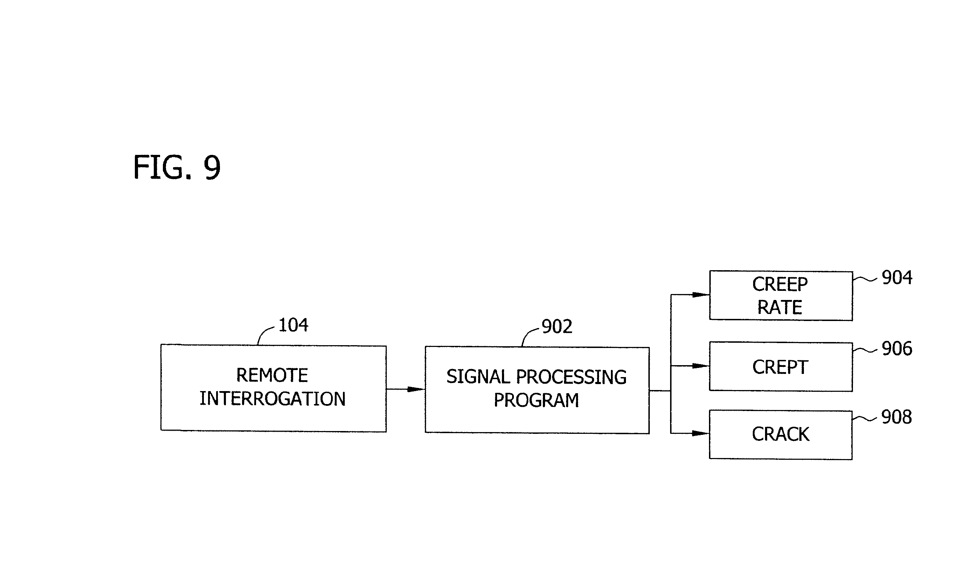

FIG. 9 is a schematic block diagram of remote interrogation system 104 (shown in FIG. 1) in accordance with an exemplary embodiment of the present invention. In the exemplary embodiment, remote interrogation system 104 includes a signal processing program 902 configured to calculate the creep rate in real-time using collected RF signals. An RF signal generated in for example, RF sensor 113 is transmitted to conductive creep sensor assembly 116 such that a connectivity of creep sensor assembly 116 can be detected. Creep sensor assembly 116 distorts or traces break connection when a local or a global creep rate 904 exceeds a pre-determined limit. Such distortion or breakage provides a digital device to detect "crept" 906 or "non-crept" blades. In various embodiments, remote interrogation system 104 is configured to perform as an analog device to measure creep rate 904. Remote interrogation system 104 is configured to measure creep and an amount 908 of object cracking simultaneously.

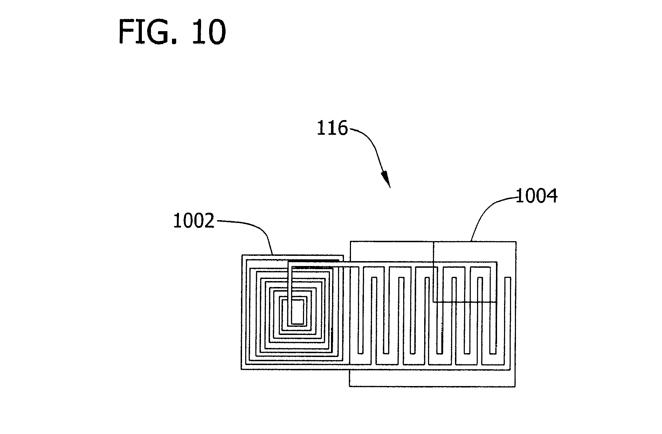

FIG. 10 is a plan view of creep sensor assembly 116 associated with remote interrogation system 104 in accordance with an exemplary embodiment of the present invention. In the exemplary embodiment, creep sensor assembly 116 is associated with an RF remote interrogation system and includes an antenna portion 1002 and a capacitor portion 1004. Antenna portion 1002 and capacitor portion 1004 are formed on a surface of object 114 as described above. Each of antenna portion 1002 and capacitor portion 1004 adhere to and move with the surface of object 114 that they are adhered to. As such, if a portion of the surface of object 114 stretches due to creep, one or both of antenna portion 1002 and capacitor portion 1004 will also stretch with the surface. Charging the dimensions of antenna portion 1002 and/or capacitor portion 1004 causes their electric properties to change correspondingly. The changes in the electrical properties are determined when creep sensor assembly 116 is interrogated by remote interrogation system 104. Remote interrogation system 104 is then able to determine an amount of creep, a rate of creep, a presence of cracking in the surface, and other related properties of object 114 during operation and in real-time.

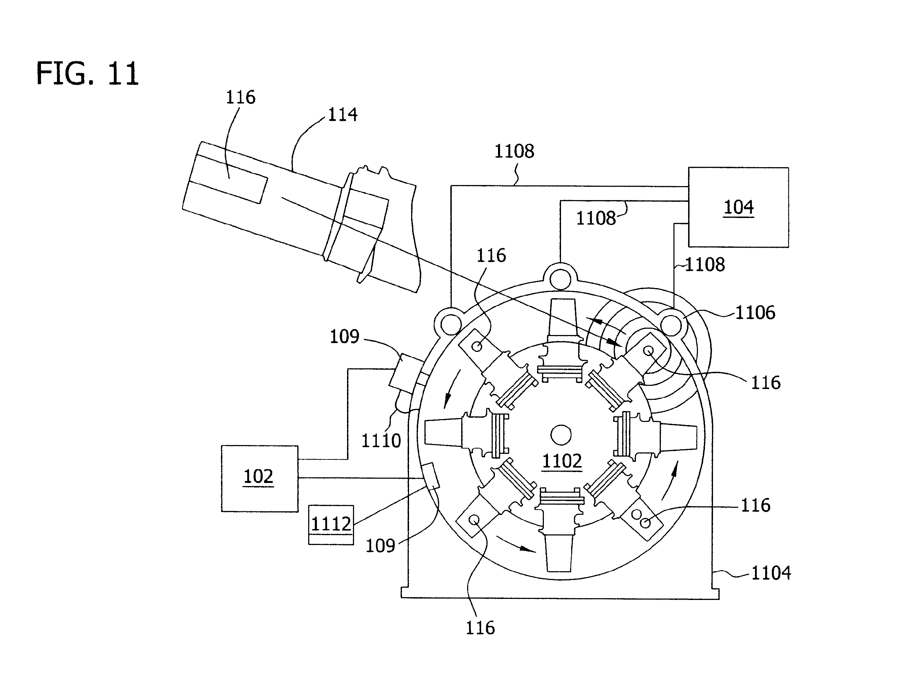

FIG. 11 is a schematic diagram of remote interrogation system 104 (shown in FIG. 1) in accordance with an exemplary embodiment of the present invention. In the exemplary embodiment, a turbine rotor 1102 is rotatably supported within a turbine casing 1104. Turbine rotor 1102 includes a plurality of objects 114 (shown in FIG. 1) spaced circumferentially thereon. One or more interrogators 1106, which may be embodied in an RF transceiver, are spaced circumferentially about turbine rotor 1102. Interrogators 1106 are communicatively coupled to remote interrogation system 104 through hard wire conduits 1108 or wirelessly. One or more objects 114 includes a creep sensor assembly 116 formed thereon or coupled thereto as described above. In another embodiment, one or more imaging sensors 109 are spaced circumferentially about turbine casing 1104 and are communicatively coupled to online imaging system 102. In one embodiment, imaging sensor 109 is positioned outside of turbine casing 1104 and uses a viewport extending through turbine casing 1104 to permit a direct line of sight between imaging sensor 109 and creep sensor assembly 116. In another embodiment, imaging sensor 109 uses a fiber 1110 to permit a view of creep sensor assembly 116 for image acquisition. In yet another embodiment, imaging sensor 109 is positioned within turbine casing 1104 and hardened to withstand the environment within turbine casing 1104. Such hardening may include cooling 1112 via a closed loop cooling system or may include an open loop cooling system, such as, but not limited to, a bleed air system.

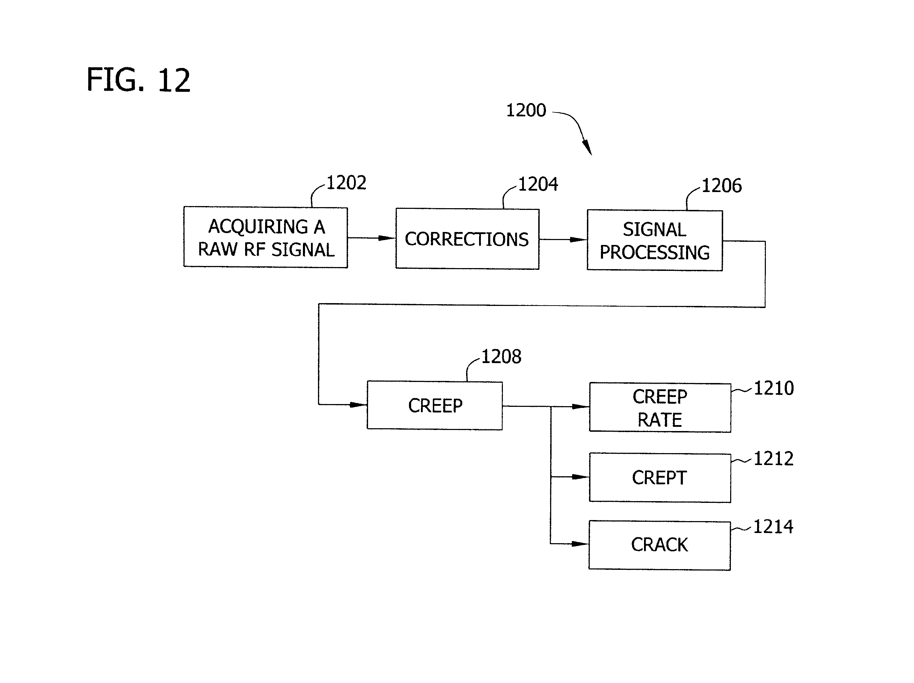

FIG. 12 is a flow chart of a method 1200 of remotely interrogating RF creep sensor assemblies 116 formed on, for example, high-speed rotating objects 114 such as turbine blades. The patterns of creep sensor assemblies 116 are for example, directly deposited on the blade surface by direct write, thermal spray or screen printing techniques. The patterns are formed of a multi-layered structure to match the thermal expansion of the blade, to increase the longevity under harsh environments, and to serve as insulation. In the exemplary embodiment, method 1200 includes acquiring 1202 a raw RF signal that represents a condition of at least one of creep sensor assemblies 116. Corrections 1204 to the raw signal are applied and the corrected signals are transmitted to an RF processor 1206 for signal processing. The signals are processed to generate output signals representative of a creep 1208 of objects 114 using creep sensor assemblies 116. Additionally, creep rate 1210, an amount object 114 has crept 1212, and a presence of a crack 1214 in object 114 are determined simultaneously.

As used herein, real-time refers to outcomes occurring at a substantially short period after a change in the inputs affecting the outcome, for example, computational calculations. The period may be an amount of time between each iteration of a regularly repeated task. Such repeated tasks are called periodic tasks. The time period is a design parameter of the real-time system that may be selected based on the importance of the outcome and/or the capability of the system implementing processing of the inputs to generate the outcome. Additionally, events occurring in real-time occur without substantial intentional delay. In contrast, as used herein, near real-time refers to outcomes occurring with some delay after a change in the inputs affecting the outcome. The delay may be intentional, such as due to a timer, or may be unintentional, such as due to latency within a network.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processors 106 and 110, including RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is real-time detection and monitoring of creep in moving objects. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of simultaneously measuring creep rate, crack, temperature and coating spallation in a real-time online prognostics and health monitoring (PHM) system provides a cost-effective and reliable means for providing a model based lifing prediction for moving objects while in service. As a result, the method and system described herein facilitate managing machinery assets in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A creep monitoring system (100) comprising:
a creep sensor assembly (116) formed onto a surface of an object (114) rotatable about an axis, said creep sensor assembly comprising an image pattern (300);
an optical monitoring system with line of sight to said creep sensor assembly, said optical monitoring system configured to collect information from said creep sensor assembly; and
a processor (110) arranged to:
receive the information; and
determine at least one of an amount of creep (124) and a rate of creep of the object.

2. A creep monitoring system (100) in accordance with Claim 1, wherein said creep sensor assembly (116) comprises an image pattern (300) formed by direct deposition on a surface of the object (114).

3. A creep monitoring system (100) in accordance with Claim 1 or 2, wherein said creep sensor assembly (116) comprises a surface feature of the object (114).

4. A creep monitoring system (100) in accordance with Claim 1, 2, or 3, further comprising:
a radio frequency (RF) interrogatable circuit (113) coupled to the surface of the object (114); and
a radio frequency interrogator (104) coupled in RF communication with said RF interrogatable circuit.

5. A creep monitoring system (100) in accordance with Claim 4, wherein said creep sensor assembly (116) comprises an antenna portion (1002) and a capacitor portion (1004), said antenna portion configured to communicate with a radio frequency interrogator (1106) communicatively coupled to said online monitoring system, said capacitor portion configured to deform with creep of the object (114).

6. A creep monitoring system (100) in accordance with Claim 5, wherein the deformation of the capacitor portion (1004) changes an output of said creep sensor assembly (116) when interrogated by said interrogator (1106).

7. A creep monitoring system (100) in accordance with any of Claims 1 to 6, wherein said creep sensor assembly (116) comprises a creep sensor (506) formed on an environmental coating coupled to a surface of the object (114).

8. A creep monitoring system (100) in accordance with any of Claims 1 to 6, wherein said creep sensor assembly (116) comprises a creep sensor (506) formed on a dielectric layer (510) coupled to an environmental coating (504) coupled to a surface of the object (114).

9. A creep monitoring system (100) in accordance with any of Claims 1 to 6, wherein said creep sensor assembly (116) comprises a creep sensor (506) formed on a thermal barrier coating (TBC) (518) coupled to a surface of the object (114).

10. A creep monitoring system (100) in accordance with any of Claims 1 to 6, wherein said creep sensor assembly (116) comprises a protective overcoat layer (520) covering a creep sensor (506).

11. A method of monitoring creep in a moving object, said method comprising:
monitoring a creep sensor assembly (116) on a movable object (114);
receiving from the creep sensor assembly (116) information relative to creep associated with the movable object (114) while the movable object is moving;
determining, using a processor (110), at least one of an amount of creep and a rate of creep of the moving object; and
outputting the at least one of an amount of creep and a rate of creep of the moving object (114).

12. A method in accordance with Claim 11, wherein monitoring a creep sensor assembly (116) comprises monitoring at least one of an imaging sensor (109) and a radio frequency sensor (113) to the movable object.

13. A method in accordance with Claims 11 or 12, further comprising applying a direct deposited creep sensor assembly to the movable object.

14. A method in accordance with Claims 11, 12, or 13, wherein receiving from the creep sensor assembly (116), information relative to creep associated with the moving object (116) comprises receiving image pattern information (300).

15. A method in accordance with any of Claims 11 to 13, wherein receiving from the creep sensor assembly (116), information relative to creep associated with the moving object (114) comprises receiving a radio frequency signal from an interrogatable radio frequency creep sensor (113).
